# EUROPÄISCHE PATENTSCHRIFT

(11) **EP 3 143 266 B1**
(45) Veröffentlichungstag und Bekanntmachung des Hinweises auf die Patenterteilung: **07.03.2018**
(21) Anmeldenummer: 15744467.0
(22) Anmeldetag: 07.05.2015
(51) Int. Cl.: F02B 75/04, F16C 7/06

(54) **PLEUEL FÜR EINE VERBRENNUNGSKRAFTMASCHINE**
CONNECTING ROD FOR AN INTERNAL COMBUSTION ENGINE
BIELLE POUR UN MOTEUR À COMBUSTION INTERNE

(30) Priorität: 12.05.2014 AT 503302014
(43) Veröffentlichungstag der Anmeldung: 22.03.2017
(73) Patentinhaber: IMT-C Innovative Motorfahrzeuge und Technologie - Cooperation GmbH, 4631 Krenglbach (AT)
(72) Erfinder: GANGLMAYR, Josef, A-4631 Krenglbach (AT)
(74) Vertreter: Patentanwaltskanzlei Hübscher
(86) Internationale Anmeldenummer: PCT/AT2015/050114
(87) Internationale Veröffentlichungsnummer: WO 2015/172168

(56) Entgegenhaltungen:
- EP-A1- 1 424 486
- DE-A1-102012 002 832
- JP-A- H06 212 993
- JP-U- S5 940 537

## Beschreibung

### Technisches Gebiet

Die Erfindung bezieht sich auf ein Pleuel für eine Verbrennungskraftmaschine mit einem Schaft und zwei Pleuelaugen, von denen das einen Kolbenbolzen aufnehmende Pleuelauge einen ein Bolzenlager bildenden Exzenter aufweist, und mit einem über einen hydraulischen Stellzylinder antreibbaren Stelltrieb für einen Zahnkranz des Exzenters.

### Stand der Technik

Zum Verändern des Verdichtungsverhältnisses ist es bei Verbrennungskraftmaschinen unter anderem bekannt, die wirksame Länge der die Kolben mit der Kurbelwelle verbindenden Pleuel über einen das Bolzenlager für den Kolbenzapfen bildenden Exzenter zu verstellen. Um einen Übergang zwischen verschiedenen, einzustellenden Verdichtungsverhältnissen zu ermöglichen, wurde bereits vorgeschlagen (DE 10 2005 055 199 A1), den Exzenter auf einander gegenüberliegenden Seiten mit zwei Kurbelarmen zu verbinden, an denen an Stellkolben angelenkte Schubstangen angreifen. Über ein Umschaltventil können die jeweils über ein Rückschlagventil mit Hydraulikdruck beaufschlagbaren Stellzylinder abwechselnd an eine Rücklaufleitung angeschlossen werden, sodass bei einer Druckbelastung des Pleuels der Kolben des an die Rücklaufleitung angeschlossenen Stellzylinders Hydraulikmittel aus dem Zylinderraum verdrängt, während über den Kolben des anderen Stellzylinders Hydraulikmittel in den Zylinderraum mit der Folge nachgesaugt wird, dass der Exzenter gedreht wird. Durch ein Umschalten des Umschaltventils kann eine gegensinnige Drehverstellung des Exzenters eingeleitet werden, wobei beim Sperren des Rücklaufs beider Stellzylinder die jeweilige Drehlage des Exzenters hydraulisch festgehalten wird. Nachteilig bei dieser bekannten Konstruktion ist, dass aufgrund des Verstellmechanismus über zwei gegenläufige Schubstangen der mögliche Drehwinkel für den Exzenter begrenzt ist und dass die auf das Pleuel einwirkenden Kräfte den Verstellmechanismus belasten, und zwar auch dann, wenn durch eine Dämpfung der Stellbewegung des Exzenters versucht wird, die Belastungen während der Exzenterverstellung zu verringern.

Darüber hinaus ist es bekannt (JP S5940537 U, JP H06 212993 A), den Stelltrieb für den ein Bolzenlager des Pleuels bildenden Exzenter als hydraulischen Stellzylinder auszubilden, der an einem Zahnkranz des Exzenters angreift. Da die Umfangslänge des Zahnkranzes nur eine begrenzte Drehverstellung des Exzenters zulässt, muss mit entsprechenden Belastungen des Stelltriebs in den Arbeitsstellungen des Exzenters gerechnet werden.

### Darstellung der Erfindung

Der Erfindung liegt somit die Aufgabe zugrunde, ein Pleuel für eine Verbrennungskraftmaschine so auszugestalten, dass beim Einsatz eines Exzenters zur Einstellung des Verdichtungsverhältnisses der Verbrennungskraftmaschine über eine Änderung der wirksamen Pleuellänge eine Belastung des Stelltriebs über den Exzenter in der jeweils gewählten Verdichtungsstellung ausgeschlossen werden kann.

Ausgehend von einem Pleuel der eingangs geschilderten Art löst die Erfindung die gestellte Aufgabe dadurch, dass der Exzenter zwischen zwei zumindest angenähert um 180° gegeneinander versetzten, anschlagbegrenzten Arbeitsstellungen drehverstellbar gelagert ist, in denen die Achse des Bolzenlagers zumindest angenähert in einer gemeinsamen Axialebene der beiden Pleuelaugen liegt, und dass der Stelltrieb ein mit einem Zahnkranz des Exzenters kämmendes Zahnrad umfasst.

Durch die Drehverstellung des Exzenters zwischen zwei um 180° gegeneinander winkelversetzten Arbeitsstellungen, in denen die Achsen des Bolzenlagers jeweils in einer gemeinsamen Axialebene der beiden Pleuelaugen liegen, wird sichergestellt, dass die durch die Verbrennungskraftmaschine bedingten Pleuelbelastungen kein bzw. bei einer Pleuelschrägstellung nur ein geringes Drehmoment auf den Exzenter ausüben können, sodass der Stelltrieb für den Exzenter in dessen Arbeitsstellungen nahezu belastungsfrei bleibt. Dies gilt nicht nur für die geometrischen Totpunktlagen des Exzenters, in denen die Achse des Bolzenlagers in der gemeinsamen Axialebene der beiden Pleuelaugen liegt, sondern auch in einem Nahebereich dieser Totpunktlagen. Aufgrund der im Totpunktbereich durch einen Anschlag vorgegebenen Arbeitsstellungen des Exzenters werden für die Verriegelung dieser Arbeitsstellungen keine besonderen Haltekräfte erforderlich, was einfache Konstruktionsverhältnisse mit sich bringt, insbesondere wenn eine anschlagbegrenzte Übertotpunktlage für die beiden Arbeitsstellungen vorgesehen wird.

Wegen der Drehverstellung zumindest angenähert um 180° können im Vergleich zu einer nur begrenzten Drehverstellung des Exzenters bei einer gleichbleibenden Änderungsrate des Verdichtungsverhältnisses Exzenter mit einer geringeren Exzentrizität eingesetzt und daher kleinere Baugrößen sichergestellt werden.

Arbeitsstellungen im Bereich der beiden Totpunktlagen des Exzenters bedingen allerdings entsprechende Stelltriebe für den Exzenter. Durch das Vorsehen eines mit einem Zahnkranz für den Exzenter kämmenden Zahnrads können konstruktiv einfache über einen hydraulischen Stellzylinder antreibbare Stelltriebe Verwendung finden, die platzsparend im Pleuelschaft untergebracht werden können. Zur Umsetzung der linearen Stellbewegung eines hydraulischen Stellzylinders in eine für die Exzenterverstellung erforderliche Drehbewegung kann vorteilhaft eine mit einem Zahnrad kämmende Zahnstange vorgesehen werden. Der für eine Drehverstellung um 180° erforderliche Stellweg der Zahnstange hängt vom Durchmesser des mit der Zahnstange kämmenden Zahnrads ab. Aus diesem Grund ist es empfehlenswert, das mit dem Zahnkranz kämmende Zahnrad über eine Welle anzutreiben, auf der das von der Zahnstange getriebene Zahnrad sitzt, sodass für die Exzenterverstellung eine entsprechende Übersetzung genützt werden kann.

Der vom hydraulischen Stellzylinder angetriebene Stelltrieb kann aber auch eine von einer Zahnstange angetriebene Königswelle umfassen, über die dann der Exzenterantrieb abgeleitet wird, beispielsweise über ein Schneckengetriebe. Es kommt ja lediglich darauf an, dass der Stelltrieb die lineare Kolbenbewegung des hydraulischen Stellzylinders in eine Drehbewegung umwandelt, wofür unter Umständen auch ein Schubstangengetriebe eingesetzt werden kann. Es besteht im Allgemeinen allerdings die Forderung, dass der Stelltrieb die Abmessungen des Pleuels nicht in einem seinen üblichen Einbau gefährdenden Ausmaß verändern darf.

Besonders vorteilhafte Konstruktionsverhältnisse ergeben sich, wenn der hydraulische Stellzylinder einen beidseitig beaufschlagbaren Kolben aufweist, weil in diesem Fall die Drehverstellung des Exzenters in beiden Richtungen durch eine entsprechende Druckbeaufschlagung des Stellzylinders über ein entsprechendes Umschaltventil vorgenommen werden kann, über das auch die beiden Arbeitsstellungen des Exzenters einfach hydraulisch verriegelbar sind. Es kann aber auch ein Stellzylinder eingesetzt werden, der gegen die Kraft einer Rückstellfeder einseitig mit hydraulischem Druckmittel beaufschlagt wird, sodass die eine Arbeitsstellung über die Rückstellfeder festgehalten wird.

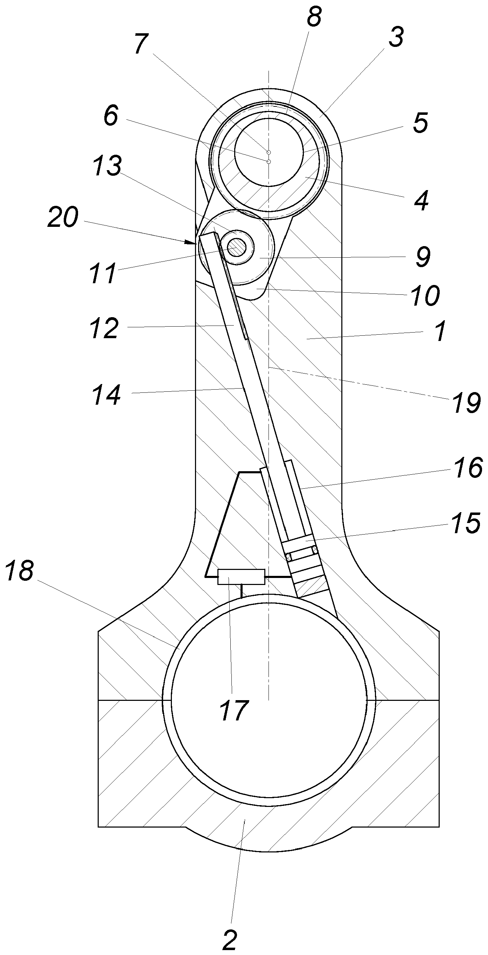

### Kurze Beschreibung der Zeichnung

In der Zeichnung ist der Erfindungsgegenstand beispielsweise dargestellt, und zwar wird ein erfindungsgemäßes Pleuel in einem schematischen Schnitt gezeigt.

### Weg zur Ausführung der Erfindung

Das schematisch dargestellte Pleuel für eine Verbrennungskraftmaschine weist in herkömmlicher Weise einen Schaft 1 mit einem Pleuelauge 2 für einen Hubzapfen der Kurbelwelle und mit einem Pleuelauge 3 für einen Kolbenzapfen auf. Zur Einstellung der wirksamen Pleuellänge ist im Pleuelauge 3 für den Kolbenzapfen ein Exzenter 4 koaxial zum Pleuelauge 3 drehbar gelagert, der ein exzentrisches Bolzenlager 5 bildet. Die Achse des Pleuelauges 3 bzw. die Drehachse des Exzenters 4 ist mit 6 bezeichnet. Die Achse des Bolzenlagers 5 ist unter dem Bezugszeichen 7 angedeutet.

Zur Drehverstellung des Exzenters 4 ist dieser mit einem Zahnkranz 8 versehen, der mit einem Zahnrad 9 kämmt. Das Zahnrad 9 ist in einer Pleueltasche 10 auf einer Welle 11 gelagert, auf der ein mit einer Zahnstange 12 kämmendes Zahnrad 13 drehfest gelagert ist. Die in einer Führung 14 des Pleuelschafts 1 geführte Zahnstange 12 ist mit dem Kolben 15 eines hydraulischen Stellzylinders 16 verbunden, der über ein Umschaltventil 17 mit einem hydraulischen Druckmittel beaufschlagt werden kann. Das über eine Umfangsnut 18 des Pleuelauges 2 für den Hubzapfen mit hydraulischem Druckmittel versorgbare Umschaltventil 17 beaufschlagt je nach der gewählten Schaltstellung wahlweise eine der beiden Kolbenseiten des Stellzylinders 16. Die Ansteuerung des Umschaltventils 17 kann in herkömmlicher Weise über eine aus Übersichtlichkeitsgründen nicht dargestellte hydraulische Steuerleitung erfolgen, die das Umschaltventil 17 beispielsweise gegen die Kraft einer Rückstellfeder umschaltet, sodass je nach der Ansteuerung des Umschaltventils 17 die Zahnstange 12 in der einen oder anderen Richtung verlagert wird.

Der Exzenter 4 ist anschlagbegrenzt zwischen zwei um 180° gegeneinander winkelversetzten Arbeitsstellungen drehverstellbar gelagert. Diese Arbeitsstellungen zeichnen sich dadurch aus, dass in ihnen die Achse 7 des Bolzenlagers 5 jeweils in der gemeinsamen Axialebene 19 der beiden Pleuelaugen 2 und 3 liegt, sodass bei einer axialen Pleuelbelastung durch den Verbrennungsdruck der Verbrennungskraftmaschine oder durch Massenkräfte nahezu kein Drehmoment auf den Exzenter 4 wirksam werden kann und daher der durch die Zahnstange 12 und das mit der Zahnstange 12 kämmende Zahnrad 13 gebildete Stelltrieb 20 kaum einer äußeren Belastung ausgesetzt wird. Dies gilt sowohl für die gezeichnete, einem höheren Verdichtungsverhältnis entsprechende Exzenterstellung als auch für die Exzenterstellung, die aufgrund der um die doppelte Exzentrizität des Bolzenlagers 5 gegenüber dem Exzenter 4 verkürzten Pleuellänge einem niedrigeren Verdichtungsverhältnis entspricht. Für den Stelltrieb 20 ergeben sich somit einfache Konstruktionsvoraussetzungen, wobei durch den Umstand, dass das mit dem Zahnkranz 8 des Exzenters 4 kämmende Zahnrad 9 über einen Stelltrieb 20 durch einem hydraulischen Stellzylinder 16 angetrieben wird, die erforderliche Drehverstellung des Exzenters 4 um jeweils 180° in einfacher Weise sichergestellt werden kann.

Die Erfindung ist selbstverständlich nicht auf das dargestellte Ausführungsbeispiel beschränkt. So könnten die beiden Arbeitsstellungen des Exzenters 4 auch durch eine Übertotpunktlage des Exzenters 4 bestimmt sein. Im Nahebereich der Totpunktlagen bleiben die Drehmomentbelastungen des Exzenters 4 beschränkt, sodass die mit den Totpunktlagen des Exzenters 4 verbundenen Vorteile genützt werden können. Außerdem muss die Stellbewegung des Stellzylinders 16 keineswegs über eine Zahnstange in eine für den Antrieb des Zahnrads 9 erforderliche Drehbewegung umgewandelt werden.

## Patentansprüche

1. Pleuel für eine Verbrennungskraftmaschine mit einem Schaft (1) und zwei Pleuelaugen (2, 3), von denen das einen Kolbenbolzen aufnehmende Pleuelauge (3) einen ein Bolzenlager (5) bildenden Exzenter (4) aufweist, und mit einem über einen hydraulischen Stellzylinder (16) antreibbaren Stelltrieb (20) für einen Zahnkranz (8) des Exzenters (4), **dadurch gekennzeichnet, dass** der Exzenter (4) zwischen zwei zumindest angenähert um 180° gegeneinander versetzten, anschlagbegrenzten Arbeitsstellungen drehverstellbar gelagert ist, in denen die Achse (7) des Bolzenlagers (5) zumindest angenähert in einer gemeinsamen Axialebene (19) der beiden Pleuelaugen (2, 3) liegt, und dass der im Schaft (1) untergebrachte Stelltrieb (20) ein mit dem Zahnkranz (8)) des Exzenters (4) kämmendes Zahnrad (9) umfasst.

2. Pleuel nach Anspruch 1, **dadurch gekennzeichnet, dass** der Exzenter (4) in den beiden Arbeitsstellungen eine anschlagbegrenzte Übertotpunktstellung einnimmt.

3. Pleuel nach Anspruch 1 oder 2, **dadurch gekennzeichnet, dass** der Stelltrieb (20) eine mit dem Kolben (15) des Stellzylinders (16) verbundene, mit einem Zahnrad (13) kämmende Zahnstange (12) aufweist.

4. Pleuel nach einem der Ansprüche 1 bis 3, **dadurch gekennzeichnet, dass** der hydraulische Stellzylinder (16) einen beidseitig beaufschlagbaren Kolben (15) aufweist.

5. Pleuel nach Anspruch 4, **dadurch gekennzeichnet, dass** der Kolben (15) des hydraulischen Stellzylinders (16) über ein Umschaltventil 17 beaufschlagbar ist, das über eine Umfangsnut (18) des Pleuelauges (2) für den Hubzapfen mit hydraulischem Druckmittel versorgbar ist.

## Claims

1. Connecting rod for an internal combustion engine comprising a shaft (1) and two connecting rod eyes (2, 3), of which the connecting rod eye (3) which receives a piston pin has an eccentric (4) forming a pin bearing (5), and comprising an actuating drive (20), which can be driven via a hydraulic actuating cylinder (16), for a gear ring (8) of the eccentric (4), **characterised in that** the eccentric (4) is mounted so it is rotationally adjustable between two stop-limited operating positions, which are offset by at least approximately 180° from one another, in which the axis (7) of the pin bearing (5) is located at least approximately in a common axial plane (19) of the two connecting rod eyes (2, 3), and the actuating drive (20) which is accommodated in the shaft (1) comprises a gearwheel (9) which meshes with the gear ring (8) of the eccentric (4).

2. Connecting rod as claimed in claim 1, **characterised in that** the eccentric (4) assumes a stop-limited top dead centre position in the two operating positions.

3. Connecting rod as claimed in claim 1 or 2, **characterised in that** the actuating drive (20) has a toothed rack (12) which is connected to the piston (15) of the actuating cylinder (16) and meshes with a gearwheel (13).

4. Connecting rod as claimed in any one of claims 1 to 3, **characterised in that** the hydraulic actuating cylinder (16) has a piston (15) which can be acted upon on both sides.

5. Connecting rod as claimed in claim 4, **characterised in that** the piston (15) of the hydraulic actuating cylinder (16) can be acted upon by means of a switching valve 17 which can be supplied with hydraulic pressurising medium via a circumferential groove (18) of the connecting rod eye (2) for the crank pin.

## Revendications

1. Bielle pour un moteur à combustion interne, avec une tige (1) et deux têtes de bielle (2, 3), dont la tête de bielle (3) recevant un axe de piston comporte un excentrique (4) formant un support de boulon (5), et avec une transmission de réglage (20) pouvant être entraînée par un vérin de réglage (16) hydraulique pour une couronne dentée (8) de l'excentrique (4), **caractérisée en ce que** l'excentrique (4) est logé de manière à pouvoir être réglé en rotation entre deux positions de travail décalées au moins approximativement de 180° l'une par rapport à l'autre, limitées par une butée, dans lesquelles l'axe (7) du support de boulon (5) se situe au moins approximativement dans un plan axial (19) commun aux deux têtes de bielle (2, 3) et **en ce que** la transmission de réglage (20) logée dans la tige (1) comprend une roue dentée (9) s'engrenant avec la couronne dentée (8) de l'excentrique (4).

2. Bielle selon la revendication 1, **caractérisée en ce que** l'excentrique (4) adopte, dans les deux positions de travail, une position de dépassement de point mort limitée par une butée.

3. Bielle selon la revendication 1 ou 2, **caractérisée en ce que** la transmission de réglage (20) présente une crémaillère (12) s'engrenant avec une roue dentée (13) et reliée avec le piston (15) du vérin de réglage (16).

4. Bielle selon l'une des revendications 1 à 3, **caractérisée en ce que** le vérin de réglage (16) hydraulique présente un piston (15) pouvant être sollicité de part et d'autre.

5. Bielle selon la revendication 4, **caractérisée en ce que** le piston (15) du vérin de réglage (16) hydraulique peut être sollicité par une vanne d'inversion (17) qui peut être alimentée en un fluide hydraulique de pression par le biais d'une rainure circonférentielle (18) de la tête de bielle (2) pour le maneton.
